# EUROPEAN PATENT APPLICATION

(11) **EP 4 779 534 A1**
(43) Date of publication of application: **22.07.2026**
(21) Application number: 24913333.1
(22) Date of filing: 29.10.2024
(51) Int. Cl.: G06N 20/00, G01N 21/25, G01J 3/46, D06B 23/10

(54) **METHOD AND APPARATUS FOR PREDICTING DISCOLORATION OF ARTIFICIAL LEATHER**

(30) Priority: 27.12.2023 KR 20230193637
(71) Applicant: Kolon Industries, Inc., Seoul 07793 (KR); Kyungpook National University Industry-Academic Cooperation Foundation, Daegu 41566 (KR)
(72) Inventor: PARK, Chul Kwon, Seoul 07793 (KR); YOU, Hyuk Jae, Seoul 07793 (KR); JEON, Seon Hee, Seoul 07793 (KR); KIM, Tae Kyeong, Daegu 41566 (KR)
(74) Representative: Ter Meer Steinmeister & Partner
(86) International application number: PCT/KR2024/016608
(87) International publication number: WO 2025/143496

(57) **Abstract**

A method of generating a post-exposure discoloration estimation model may include obtaining color information of a substrate to be dyed and dye combination information corresponding to the color information, obtaining process information corresponding to the dye combination, obtaining post-exposure discoloration information of artificial leather that has been dyed based on the process information, and generating a machine learning model by using, as a data set, the dye combination information, the process information, and the post-exposure discoloration information, the machine learning model being configured to estimate the post-exposure discoloration information from the dye combination information and the process information.

## Description

### Technical Field

The present disclosure relates to a method of generating a post-exposure discoloration estimation model and a technology for dyeing artificial leather by utilizing the same. In particular, the present disclosure relates to a technology for estimating post-exposure discoloration of dyed artificial leather by utilizing color information, dye combinations, dyeing conditions, and the like in a dyeing process.

### Background Art

The dyeing industry has developed through various cultures and eras. In the early days, dyeing by hand using natural dyes was predominant, but after the Industrial Revolution, dyeing technology has advanced significantly with the invention of synthetic dyes and the introduction of mechanized processes.

However, despite such historical developments, the dyeing industry in modern times still faces various complex and unpredictable challenges. Traditional dyeing methods rely primarily on the hands and experience of users, which greatly limits the predictability and consistency of a dyeing process. For example, in a dyeing process performed manually, the mixing ratio of dyes, dyeing time, temperature, and the like depend on human judgment, thereby making reproduction of identical results difficult.

Such traditional methods have two major problems. First, the lack of reproducibility and consistency in the dyeing process poses a significant challenge in modern industries where mass production and standardization are required. Second, the complexity of the dyeing process impedes efficiency and sustainability. Many manual processes require time and labor, and frequent trial and error leads to a waste of resources.

The background art described above is technical information that the inventors possessed for deriving the present disclosure or acquired in the process of deriving the present disclosure, and is not publicly known technology disclosed to the general public before the filing of the present disclosure.

### Disclosure of Invention

### Technical Problem

Embodiments of the present specification are proposed to address the aforementioned problems and may more effectively determine a dyeing process.

### Solution to Problem

According to an embodiment of the present disclosure, a method of generating a post-exposure discoloration estimation model includes obtaining color information of a substrate to be dyed and dye combination information corresponding to the color information, obtaining process information corresponding to the dye combination information, obtaining post-exposure discoloration information of artificial leather that has been dyed based on the process information, and generating a machine learning model by using, as a dataset, the dye combination information, the process information, and the post-exposure discoloration information, the machine learning model being configured to estimate the post-exposure discoloration information from the dye combination information and the process information.

The process information may include dye and dyeing auxiliary usage information, composition information of an article to be dyed, dyeing liquor ratio information, dyeing temperature information, dyeing time information, and pretreatment information.

The method may further include augmenting the process information, based on at least one of numerical transformation, interpolation, and noise addition.

The machine learning model may be implemented by a multiple regression analysis-based algorithm.

According to an embodiment of the present disclosure, a method of dyeing artificial leather includes identifying a first color of a substrate to be dyed and first post-exposure discoloration information, obtaining, based on a machine learning model, first dye combination information and first process information corresponding to the first color of the substrate to be dyed and the first post-exposure discoloration information, and dyeing the substrate to be dyed, based on the first dye combination information and the first process information.

The machine learning model may be generated by a method including obtaining the first color of the substrate to be dyed and dye combination information corresponding to the first color, obtaining process information corresponding to the dye combination information, obtaining post-exposure discoloration information of the substrate that has been dyed based on the process information, and generating a machine learning model by using, as a dataset, the dye combination information, the process information, and the post-exposure discoloration information, the machine learning model being configured to estimate the post-exposure discoloration information from the dye combination information and the process information.

According to an embodiment of the present disclosure, a computer apparatus includes a processor configured to execute instructions including obtaining color information of a substrate to be dyed and dye combination information corresponding to the color information, obtaining process information corresponding to the dye combination information, obtaining post-exposure discoloration information of the substrate that has been dyed based on the process information, and generating a machine learning model by using, as a dataset, the dye combination information, the process information, and the post-exposure discoloration information, the machine learning model being configured to estimate the post-exposure discoloration information from the dye combination information and the process information.

The process information may include dye usage and liquor ratio information, composition information of the substrate to be dyed, dyeing temperature and time information, and post-dyeing process conditions.

The instructions may further include augmenting the process information, based on at least one of numerical transformation, interpolation, and noise addition.

The machine learning model may be a post-exposure discoloration estimation model implemented by a multiple regression analysis-based algorithm.

According to an embodiment of the present disclosure, a fabric dyeing machine includes a dye supplier configured to, based on first dye combination information and first process information, supply a dye, a temperature controller configured to control a temperature and a time of a fabric, and a controller configured to identify a first color of a substrate to be dyed and first post-exposure discoloration information, obtain, based on a machine learning model, the first dye combination information and the first process information corresponding to the first color of the substrate to be dyed and the first post-exposure discoloration information, and control dyeing of the substrate to be dyed, based on the first dye combination information and the first process information.

The machine learning model may be generated by a method including obtaining the first color of the substrate to be dyed and dye combination information corresponding to the first color, obtaining process information corresponding to the dye combination information, obtaining post-exposure discoloration information of artificial leather that has been dyed based on the process information, and generating a machine learning model by using, as a dataset, the dye combination information, the process information, and the post-exposure discoloration information, the machine learning model being configured to estimate the post-exposure discoloration information from the dye combination information and the process information.

### Advantageous Effects of Invention

According to an embodiment of the present disclosure, post-exposure discoloration of artificial leather may be estimated from dye combination information and process information by using a machine learning model.

According to an embodiment of the present disclosure, a dyeing process may be performed according to dyeing conditions and post-exposure discoloration requirements.

The effects of the embodiments are not limited to the effects mentioned above, and other effects not mentioned will be clearly understood by those of ordinary skill in the art from the description of the claims.

### Brief Description of Drawings

FIG. 1 is a flowchart illustrating an operation of generating a machine learning model, according to an embodiment of the present disclosure.
FIG. 2 is a flowchart illustrating an operation of dyeing a substrate, according to an embodiment of the present disclosure.
FIG. 3 is a diagram for explaining a machine learning model according to an embodiment of the present disclosure.
FIG. 4 is a schematic block diagram illustrating a block configuration of a computer apparatus, according to an embodiment of the present disclosure.
FIG. 5 is a schematic block diagram illustrating a block configuration of a fabric dyeing machine, according to an embodiment of the present disclosure.

### Mode for the Invention

As the present disclosure allows for various changes and numerous embodiments, embodiments will be illustrated in the drawings and described in detail in the written description. Effects and features of the present disclosure, and methods for achieving them will be clarified with reference to embodiments described below in detail with reference to the drawings. However, the present disclosure is not limited to the following embodiments and may be embodied in various forms.

Hereinafter, the present disclosure will be described in detail by explaining embodiments of the present disclosure with reference to the attached drawings. Like reference numerals in the drawings denote like elements.

It will be understood that, although terms such as "first" and "second" may be used herein to describe various elements, these elements should not be limited by these terms, and these terms are only used to distinguish one element from another.

In the following embodiments, the singular forms include the plural forms unless the context clearly indicates otherwise.

Also, it will be understood that the terms "comprise," "include," and "have" used herein specify the presence of stated features or elements, but do not preclude the presence or addition of one or more other features or elements.

Sizes of elements in the drawings may be exaggerated or reduced for convenience of description. For example, because sizes and thicknesses of elements in the drawings are arbitrarily illustrated for convenience of description, the present disclosure is not limited thereto.

When a certain embodiment may be implemented differently, a specific process order may be performed in the order different from the described order. For example, two processes that are successively described may be performed substantially simultaneously or performed in the order opposite to the order described. In the present embodiment, the term "...or/er" refers to a software or hardware component, and the "...or/er" performs certain roles. However, the term "...or/er" is not limited to software or hardware. The "...or/er" may be configured to in an addressable storage medium or may be configured to operate one or more processors.

While describing the present disclosure, detailed description of related well-known functions or configurations may be omitted when it is deemed that they may unnecessarily obscure the essence of the present disclosure.

"Machine learning" according to the present disclosure may include all forms of technology or methodologies used by a computer system to obtain knowledge from data and utilize the knowledge to perform certain tasks or solve problems. This includes, but is not limited to, traditional data analysis methods and machine learning methodologies such as supervised learning, unsupervised learning, and reinforcement learning.

That is, machine learning may include traditional machine learning algorithms such as linear regression, logistic regression, decision trees, random forests, and support vector machines. Such "machine learning" refers to algorithms and models used to learn from data to predict or classify meaningful results for certain inputs and may be trained through methods such as supervised learning, unsupervised learning, semi-supervised learning, and reinforcement learning. In addition, this may include not only a single algorithm but also various learning methods and structures such as models through ensemble learning, multi-modal learning, and transfer learning. Such machine learning methodologies are applied in various fields such as data analysis, pattern recognition, and natural language processing, and such models may be trained on one computer system and utilized on another computer system. "Training" according to the present disclosure may refer to a process in which a computer system reflects patterns or rules in a dataset into weights or parameters of a model based on an algorithm to improve the performance of a model.

The present disclosure relates to a technology utilizing machine learning technology for estimating post-exposure discoloration of a dyed article.

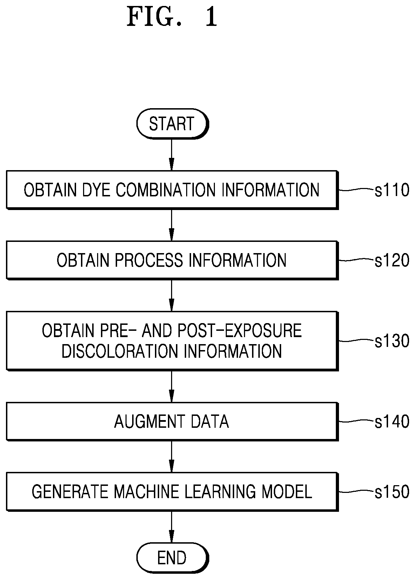

FIG. 1 is a flowchart illustrating an operation of generating a machine learning model, according to an embodiment of the present disclosure.

Referring to FIG. 1, in operation S110, a computer apparatus may obtain color information of a substrate to be dyed and dye combination information corresponding to the color information. The color information may be quantitatively expressed by using a CIE Lab* color space, red, green, and blue (RGB), cyan, magenta, yellow, and key (CMYK), a wavelength-specific K/S spectrum (Kubelka-Munk function), or other color systems. The dye combination information may refer to a combination of certain dyes used to produce a dyed substrate having a color according to the color information. The dye combination information may vary depending on the dyed substrate and may include dyes of different colors, such as direct dyes, reactive dyes, sulfur dyes, disperse dyes, vat dyes, and acid dyes used in various fiber compositions, such as cotton, polyester, nylon, polyethylene (PE), and polypropylene (PP), applied individually or in combination, artificial leather in which such fibers are impregnated with polyurethane (PU), or fabrics in the form of PU-based synthetic leather. In addition, the dye combination information may include information between dyes and auxiliaries.

According to an embodiment of the present disclosure, in operation S120, the computer apparatus may obtain process information corresponding to the dye combination information. The process information includes various parameters used in a dyeing process and may include at least one of dye usage information, dyeing temperature information, dyeing time information, and pretreatment information of the substrate to be dyed.

The dye usage information described above is an indicator indicating a quantitative amount of a certain dye used in the dyeing process and may be expressed as a percentage of dye usage relative to fiber weight (%owf). The dyeing temperature information may indicate the temperature used in the dyeing process. The dyeing time information may indicate a total time during which a dye is in contact with a substrate. Pretreatment information of an article to be dyed may include information about processes performed before dyeing, such as washing, bleaching, and mercerizing, as well as the fineness of a fiber, and the composition and content of PU for impregnation.

According to an embodiment of the present disclosure, in operation S130, the computer apparatus may obtain post-exposure discoloration information of the substrate dyed based on the process information. The post-exposure discoloration information may be quantified as pre- and post-exposure color difference information. For example, the computer apparatus may obtain color difference information in the CIE Lab* color space. In this case, L* may indicate lightness, and a* and b* may indicate red/green and yellow/blue color components, respectively. The computer apparatus may evaluate post-exposure discoloration of the dyed substrate by exposing the substrate under a light source for a certain period of time and then comparing pre- and post-exposure colors, particularly by measuring changes in L*, a*, and b* values. Such a pre- and post-exposure color difference may be expressed as a Delta E value, which is a distance between two colors in a color space.

According to an embodiment of the present disclosure, in operation S140, the computer apparatus may augment the process information based on at least one of numerical transformation, interpolation, and noise addition. The computer apparatus may expand existing data points to a wider range of values.

A variation in a range of ±x % may be applied to each dye usage amount. For example, when 10 %owf was previously used, data may be augmented to a value between 9.7 %owf and 10.3 %owf, or a modified temperature value variation within a range of -x degrees to +x degrees may be applied to a dyeing temperature. For example, when the dyeing temperature is 125 degrees, the data may be augmented to a value between 123 degrees and 127 degrees. In addition, for post-exposure discoloration, a modified color difference value within the range of -x to +x may be generated for a given color difference value. For example, when the color difference is 5.0, the data may be augmented to a value between 4.4 and 5.5.

According to an embodiment of the present disclosure, in operation S150, the computer apparatus may generate a machine learning model that estimates the post-exposure discoloration information from the dye combination information and the process information, by using, as a dataset, the dye combination information, the process information, and the post-exposure discoloration information. The computer apparatus may train a model that estimates the post-exposure discoloration information from the dye combination information and the process information, by using, as a dataset, the dye combination information, process information, and post-exposure discoloration information. For example, the computer apparatus may gradually determine weights by performing statistical analysis using the dye combination information and the process information as independent variables and the post-exposure discoloration information as a dependent variable, based on at least one algorithm among multiple regression analysis, decision trees, random forests, and neural network algorithms.

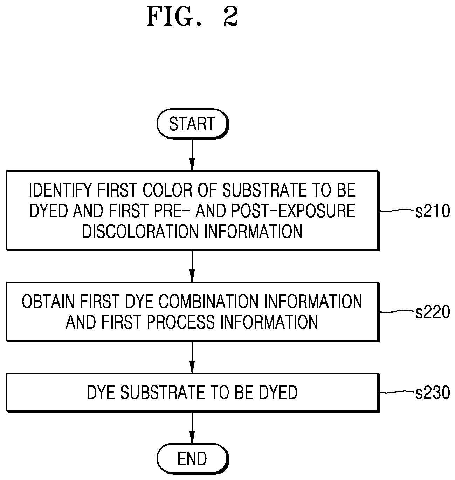

FIG. 2 is a flowchart illustrating an operation of dyeing artificial leather, according to an embodiment of the present disclosure. A machine learning model in FIG. 2 may correspond to the machine learning model in FIG. 1.

Referring to FIG. 2, in operation S210, a fabric dyeing machine may identify a first color of a substrate to be dyed and first post-exposure discoloration information. The first color may indicate a final color to be achieved in a dyeing process, and the first post-exposure discoloration information may indicate a color difference before and after final discoloration to be achieved in the dyeing process.

According to an embodiment of the present disclosure, in operation S220, the fabric dyeing machine may obtain, based on the machine learning model, first dye combination information and first process information corresponding to the first color of the substrate to be dyed and the first post-exposure discoloration information. The first dye combination information and the first process information may indicate dye combination information and process information that satisfy both the final color to be achieved in the dyeing process and pre- and post-exposure color difference conditions.

According to an embodiment of the present disclosure, in operation S230, the fabric dyeing machine may dye the substrate to be dyed based on the first dye combination information and the first process information. The computer apparatus may dye a fabric by using dye information corresponding to a first dye combination, relationship information between dyes and auxiliaries, and dye usage information, dyeing temperature information, dyeing time information, and pretreatment information corresponding to the first process information.

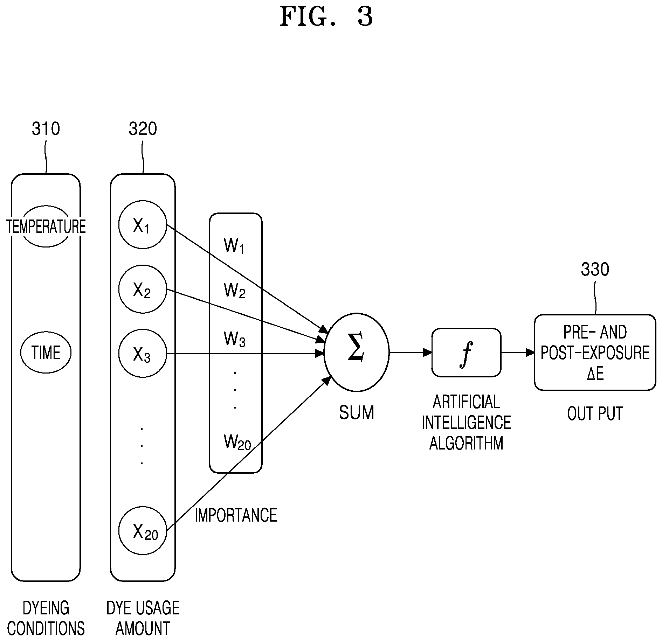

FIG. 3 is a diagram for explaining a machine learning model according to an embodiment of the present disclosure. As illustrated in FIG. 3, the computer apparatus may generate a machine learning model that estimates post-exposure discoloration information from respective process information for each dye combination information corresponding to color information and color information of a substrate to be dyed.

Referring to FIG. 3, the computer apparatus may generate a model that estimates pre- and post-exposure color difference (Delta E) information 330 based on process information, dye usage information 320, and dyeing condition information 310 such as dyeing temperature information, dyeing time information, and pretreatment information. The computer apparatus may train a machine learning model by using the dye usage information 320 and the dyeing condition information 310 as independent variables and the color difference (Delta E) information 330 as a dependent variable, based on at least one algorithm among multiple regression analysis, decision trees, random forests, and neural network algorithms.

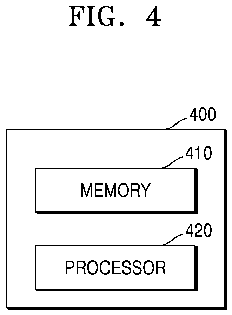

FIG. 4 is a schematic block diagram illustrating a block configuration of a computer apparatus, according to an embodiment of the present disclosure.

The computer apparatus may include a memory 410 and a processor 420. The computer apparatus may execute one or more sets of instructions that cause the computer apparatus to perform any one or more of methodologies described in the present specification.

The memory 410 may store instructions related to a system that causes the computer apparatus to perform any one or more of methodology functions described in the present specification and a set of instructions including the related instructions. For example, the memory 410 may store data such as molecular structure data, geometric and chemical descriptor data, learning model data, and molecular dynamics simulation results. The memory 410 temporarily or permanently stores data such as basic programs, application programs, and setting information for operation of the apparatus. The memory 410 may include random access memory (RAM), read only memory (ROM), and a permanent mass storage device such as a disk drive, but the present disclosure is not limited thereto. Such software components may be loaded from a computer-readable recording medium separate from the memory 410 by using a drive mechanism. Such a separate computer-readable recording medium may include computer-readable recording media such as a floppy drive, a disk, a tape, a digital versatile disc (DVD)/compact disc ROM (CD-ROM) drive, and a memory card. Depending on the embodiment, the software components may be loaded into the memory 410 through a communicator rather than the computer-readable recording medium. The memory 410 may store a machine learning model trained based on dye combinations, dyeing process information, post-exposure discoloration information, and algorithms. The machine learning model may be transmitted to another apparatus and utilized in another computer system.

The processor 420 controls overall operations of the apparatus. In addition, the processor 420 may be configured to process instructions of a computer program by performing basic arithmetic, logic, and input/output operations. The instructions may be provided to the processor 420 by the memory 410. For example, the processor 420 may be configured to execute instructions received according to program code stored in a recording device such as the memory 410. For example, the processor 420 performs various operations required to execute the methodologies specified in the present disclosure.

The processor 420 may process and calculate all data including the dye combinations, the dyeing process information, and the post-exposure discoloration information. The data may be used to calculate various variables and algorithms required to construct and execute the machine learning model.

According to an embodiment of the present disclosure, the processor 420 may obtain color information of a substrate to be dyed and dye combination information corresponding to the color information, obtain process information corresponding to the dye combination information, obtain post-exposure discoloration information of artificial leather dyed based on the process information, and generate a machine learning model that estimates the post-exposure discoloration information from the dye combination information and the process information, by using, as a dataset, the dye combination information, the process information, and the post-exposure discoloration information.

The processor 420 may be implemented as a single central processing unit (CPU) or a plurality of CPUs (or digital signal processors (DSPs) or systems on chip (SoCs)). The processor 420 may be implemented as a DSP, a microprocessor, or a time controller (TCON), each of which processes digital signals. However, the disclosure is not limited thereto, and the processor 420 may include one or more of a CPU, a micro controller unit (MCU), a micro processing unit (MPU), a controller, an application processor (AP), a communication processor (CP), and an ARM processor, or may be defined by such terms.

In addition, the computer program may be specifically designed and configured for the present disclosure or may be known and available to those of ordinary skill in computer software. Examples of the computer program may include high-level language code executable by a computer by using an interpreter or the like, as well as machine language code such as that generated by a compiler.

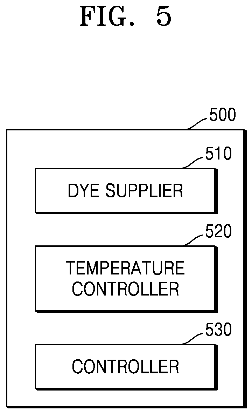

FIG. 5 is a schematic block diagram illustrating a block configuration 500 of a fabric dyeing machine, according to an embodiment of the present disclosure.

The fabric dyeing machine may include a dye supplier 510, a temperature controller 520, and a controller 530. The fabric dyeing machine may execute one or more sets of instructions that cause the fabric dyeing machine to perform any one or more of the methodologies described in the present specification.

The dye supplier 510 may supply dyes required for a certain dyeing process in accurate amounts and ratios. The dye supplier 510 may store various types of dyes and may mix and supply dyes according to a required dye combination. The dye combination is based on dye combination information determined by the controller 530. The dye supplier 510 may be controlled by the controller 530 to be controlled according to the characteristics of each dyeing process.

The temperature controller 520 may control the temperature of a fabric during the dyeing process. The temperature controller 520 is controlled according to process information provided by the controller 530. The temperature controller 520 may be controlled by the controller 530 to maintain or change the temperature required during the dyeing process of the fabric.

The controller 530 is a component that performs overall control of the dyeing machine and may control and manage the dyeing process. The controller 530 processes various types of data including dye combination information, process information, and post-exposure discoloration information, by using the machine learning model generated by the processor 420. The controller 530 may dye the fabric by adjusting the dye supplier 510 and the temperature controller 520 based on such information.

According to an embodiment of the present disclosure, the controller 530 may identify a first color of a substrate to be dyed and first post-exposure discoloration information, obtain first dye combination information and first process information corresponding to the first color of the substrate to be dyed and the first post-exposure discoloration information based on the machine learning model, and control dyeing of the substrate to be dyed based on the first dye combination information and the first process information.

The controller 530 may be implemented as a single CPU or a plurality of CPUs (or DSPs or SoCs). The controller 530 may be implemented as a DSP, a microprocessor, or a TCON, each of which processes digital signals. However, the disclosure is not limited thereto, and the control unit 530 may include one or more of a CPU, an MCU, an MPU, a controller, an AP, a CP, and an ARM processor, or may be defined by such terms.

The specific implementations described in the present disclosure are embodiments and do not limit the scope of the present disclosure in any manner. For brevity of the specification, descriptions of conventional electronic configurations, control systems, software, and other functional aspects of the systems may be omitted. In addition, connections or connection members between components illustrated in the drawings are illustrative of functional connections and/or physical or circuit connections and may be represented as various alternative or additional functional connections, physical connections, or circuit connections in an actual apparatus. Moreover, unless specifically stated otherwise, such as "essential" or "importantly," a component may not necessarily be required for the application of the present disclosure.

Although the present disclosure has been described in connection with the aforementioned embodiments, various modifications and variations may be made without departing from the spirit and scope of the present disclosure. Accordingly, the appended claims will include such modifications and variations insofar as they fall within the spirit of the present disclosure.

## Claims

1. A method of generating a post-exposure discoloration estimation model, the method comprising:
obtaining color information of a substrate to be dyed and dye combination information corresponding to the color information;
obtaining process information corresponding to the dye combination information;
obtaining post-exposure discoloration information of artificial leather dyed that has been based on the process information; and
generating a machine learning model by using, as a dataset, the dye combination information, the process information, and the post-exposure discoloration information, the machine learning model being configured to estimate the post-exposure discoloration information from the dye combination information and the process information.

2. The method of claim 1, wherein the process information comprises dye usage information, dyeing temperature information, dyeing time information, and pretreatment information.

3. The method of claim 2, further comprising augmenting the process information, based on at least one of numerical transformation, interpolation, and noise addition.

4. The method of claim 1, wherein the machine learning model is implemented by a multiple regression analysis-based algorithm.

5. A method of dyeing artificial leather, the method comprising:
identifying a first color of a substrate to be dyed and first post-exposure discoloration information;
obtaining, based on a machine learning model, first dye combination information and first process information corresponding to the first color of the substrate to be dyed and the first post-exposure discoloration information; and
dyeing the substrate to be dyed, based on the first dye combination information and the first process information,
wherein the machine learning model is generated by a method comprising:
obtaining the first color of the substrate to be dyed and dye combination information corresponding to the first color;
obtaining process information corresponding to the dye combination information;
obtaining post-exposure discoloration information of artificial leather that has been dyed based on the process information; and
generating a machine learning model by using, as a dataset, the dye combination information, the process information, and the post-exposure discoloration information, the machine learning model being configured to estimate the post-exposure discoloration information from the dye combination information and the process information.

6. A computer apparatus comprising a processor configured to execute instructions comprising:
obtaining color information of a substrate to be dyed and dye combination information corresponding to the color information;
obtaining process information corresponding to the dye combination information;
obtaining post-exposure discoloration information of artificial leather that has been dyed based on the process information; and
generating a machine learning model by using, as a dataset, the dye combination information, the process information, and the post-exposure discoloration information, the machine learning model being configured to estimate the post-exposure discoloration information from the dye combination information and the process information.

7. The computing apparatus of claim 6, wherein the process information comprises dye usage information, dyeing temperature information, dyeing time information, and pre- and post-exposure color difference information.

8. The computing apparatus of claim 7, wherein the instructions further comprise augmenting the process information, based on at least one of numerical transformation, interpolation, and noise addition.

9. The computing apparatus of claim 6, wherein the machine learning model is implemented by a multiple regression analysis-based algorithm.

10. A fabric dyeing machine comprising:
a dye supplier configured to, based on first dye combination information and first process information, supply a dye;
a temperature controller configured to control a temperature and a time of a fabric; and
a controller configured to identify a first color of a substrate to be dyed and first post-exposure discoloration information, obtain, based on a machine learning model, the first dye combination information and the first process information corresponding to the first color of the substrate to be dyed and the first post-exposure discoloration information, and control dyeing of the substrate to be dyed, based on the first dye combination information and the first process information,
wherein the machine learning model is generated by a method comprising:
obtaining the first color of the substrate to be dyed and dye combination information corresponding to the first color;
obtaining process information corresponding to the dye combination information;
obtaining post-exposure discoloration information of artificial leather that has been dyed based on the process information; and
generating a machine learning model by using, as a dataset, the dye combination information, the process information, and the post-exposure discoloration information, the machine learning model being configured to estimate the post-exposure discoloration information from the dye combination information and the process information.
